# EUROPEAN PATENT SPECIFICATION

(11) **EP 4 391 192 B1**
(45) Date of publication and mention of the grant of the patent: **08.04.2026**
(21) Application number: 22896834.3
(22) Date of filing: 30.11.2022
(51) Int. Cl.: H01M 50/489, H01M 50/434, H01M 50/403, H01M 10/0525, H01M 10/052, C08J 7/04, H01M 50/414, H01M 50/417, H01M 50/446, H01M 50/449, H01M 50/451, H01M 50/457, H01M 50/491

(54) **CERAMIC-COATED SEPARATOR WITH LOW INTERNAL RESISTANCE, PREPARATION METHOD THEREFOR, AND LITHIUM-ION BATTERY**
KERAMIKBESCHICHTETER SEPARATOR MIT GERINGEM INNEREN WIDERSTAND, HERSTELLUNGSVERFAHREN DAFÜR UND LITHIUM-IONEN-BATTERIE
SÉPARATEUR REVÊTU DE CÉRAMIQUE À FAIBLE RÉSISTANCE INTERNE, SON PROCÉDÉ DE PRÉPARATION ET BATTERIE AU LITHIUM-ION

(30) Priority: 04.11.2022 CN 202211374693
(43) Date of publication of application: 26.06.2024
(73) Proprietor: Sinoma Lithium Battery Separator (Ningxiang) Co., Ltd., Changsha City, Hunan 410600 (CN)
(72) Inventor: HU, Xuewen, Ningxiang Town Changsha City, Hunan 410600 (CN); WANG, Zelin, Ningxiang Town Changsha City, Hunan 410600 (CN); WANG, Lianjie, Ningxiang Town Changsha City, Hunan 410600 (CN); ZHANG, Dong, Ningxiang Town Changsha City, Hunan 410600 (CN); HU, Mingjie, Ningxiang Town Changsha City, Hunan 410600 (CN); YIN, Lingling, Ningxiang Town Changsha City, Hunan 410600 (CN)
(74) Representative: Huang, Liwei
(86) International application number: PCT/CN2022/135579
(87) International publication number: WO 2024/092934

(56) References cited:
- EP-A1- 2 903 055
- CN-A- 107 799 702
- CN-A- 111 341 982
- CN-A- 111 653 712
- CN-A- 111 653 715
- CN-A- 112 018 311
- CN-A- 112 072 047
- CN-A- 114 374 052
- US-A1- 2021 175 483
- ALTECH CHEMICAL LIMITED: "High Purity Alumina (HPA) Application on Lithium Ion Battery Separator", 11 May 2020 (2020-05-11), pages 1 - 12, XP093252205, Retrieved from the Internet <URL:https://www.altechadvancedmaterials.com/wp-content/uploads/2022/06/Doc-ATC-HPA-Separator-White-Paper-Final-May-20.pdf>

## Description

The present invention claims priority to Chinese Patent Application No. CN CN202211374693.1 filed on November 4, 2022, entitled "LOW-INTERNAL-RESISTANCE CERAMIC-COATED SEPARATOR AND PREPARATION METHOD THEREOF, AND LITHIUM BATTERY".

### Field

The present invention relates to the technical field of lithium battery separators, in particular to a low-internal-resistance ceramic-coated separator and a preparation method thereof, and a lithium battery.

### Background

In recent years, new energy vehicles have higher and higher requirements for high rate charge and discharge performance of power batteries. Internal resistance is an important factor affecting battery power performance and discharge efficiency, and the initial scale of internal resistance is mainly determined by the structural design, raw material performance and process technology of the batteries. With the use of lithium batteries, battery performance continues to decay, mainly manifested as capacity attenuation, internal resistance increase, power decrease, etc. The change of battery internal resistance is affected by temperature, depth of discharge and various other use conditions.

The main factors influencing ion impedance of a separator are: electrolyte distribution in the separator, and area, thickness, pore size, porosity and tortuous coefficient of the separator. Ion conduction inside the battery depends on the diffusion of Li ions in the electrolyte through the porous separator, and the liquid absorption and wetting ability of the separator is the key to forming a good ion flow channel. When the separator has a higher liquid absorption rate and porous structure, it can improve the conductivity, reduce the battery impedance, and improve the rate performance of the battery.

Compared with ordinary base films, ceramic separators and glued separators are not only higher in high temperature shrinkage resistance, but also greater in liquid absorption and wetting ability. However, the internal resistance of an existing ceramic-coated separator still needs to be further reduced.

In the prior art, the internal resistance of the ceramic-coated separator is mainly controlled through the adjustment of the thickness of the separator and the air permeability value. Usually, the thinner the separator, the smaller the resistance encountered when solvated lithium ions cross through, the better the ion conductivity, the lower the internal resistance, the greater the Gurley value, and the greater the internal resistance. However, less attention is paid to the influence of the composition ratio of coating slurry on the internal resistance of the coated separator.

In the prior art, a conventional method of preparing boehmite is the Bayer method. That is, bauxite is treated with sodium hydroxide to obtain a sodium aluminate solution, finally the aluminum hydroxide is re-precipitated to obtain the boehmite, and a certain amount of sodium is introduced in the process. In the preparation of boehmite ceramic slurry, in order to enhance the adhesion between boehmite and the base film, improve the peeling strength of the separator, a CMC solution is usually added. At the same time, CMC, as a suspension agent, can improve the particle settlement after the slurry is prepared.

Some other prior art documents can be seen in EP 2903055A1, CN111653712A, CN114374052A, Altech Chemical Limited: "High Purity Alumina (HPA) Application on Lithium Ion Battery Separator", 11 May 2020 (2020-05-11), pages 1-12.

### Summary

The present invention aims to provide a low-internal-resistance ceramic-coated separator, a preparation method thereof, and a lithium battery with the aforesaid separator, which can lower the internal resistance of a cell and thus improve the power performance and discharge efficiency of the battery.

The present invention is set out in the appended set of claims.
the present invention first provides a low-internal-resistance ceramic-coated separator, including: a polymer base film, and a ceramic layer coated on one or two sides of the polymer base film.

The ceramic layer has a sodium content of less than 1000 ppm, and does not contain sodium carboxymethyl cellulose (CMC).

A peel strength between the ceramic layer and the polymer base film is 20 N/m or above. Optionally, the peel strength is 20-70 N/m, or 30 N/m-70 N/m, or 40 N/m-70 N/m, for example, 45 N/m, 50 N/m, 55 N/m, 60 N/m, or 65 N/m.

Through formula adjustment, the low-internal-resistance ceramic-coated separator of the present invention has an ionic conductivity of 1.4 mS/cm or above, or 1.5 mS/cm or above.

The ceramic layer is formed by coating of ceramic slurry. Because the CMC is omitted, the ceramic slurry has a lower viscosity than conventional ceramic slurry, and has a viscosity of 10-40 mPa·S⁻¹, for example, 35 mPa·S⁻¹ or below, 30 mPa·S⁻¹ or below, or 25 mPa·S⁻¹ or below. A solid content of the ceramic slurry is 25%-35%.

The ceramic slurry includes the following components:
dispersant: 2-6 parts by weight;
low-sodium boehmite powder with a sodium content of less than or equal to 100 ppm: 292 parts by weight;
binder: 20-60 parts by weight; and
wetting agent: 1-4 parts by weight.

The ceramic slurry further contains a leveling agent: 30-50 parts by weight; in an optional embodiment, a model of the leveling agent is UNISAFE WHS-10.

Optionally, the ceramic layer has a thickness of 1-5 µm, and an areal density of 8-10 g/m².

Optionally, the low-internal-resistance ceramic-coated separator has a Gurley value of 75-175 sec/mL.

Optionally, the low-internal-resistance ceramic-coated separator has a water content of less than 1000 ppm, optionally less than 700 ppm or less than 500 ppm.

Optionally, the polymer base film is a polyolefin microporous film. Optionally, the polyolefin microporous film is a polyethylene microporous film, a polypropylene microporous film or a two-layer or multi-layer composite film composed of a polyethylene microporous film and a polypropylene microporous film.

The present invention further provides a preparation method of the above low-internal-resistance ceramic-coated separator, including the following steps.

Step 1, preparing ceramic slurry: adding 292 parts by weight of low-sodium boehmite powder, 2-6 parts by weight of a D-3019 dispersant, 20-60 parts by weight of a BM-900B binder, and 1-4 parts by weight of a 202E type wetting agent, and stirring and dispersing all the components in water uniformly to obtain the stable ceramic slurry.

Step 2, coating the slurry: providing a polymer base film, coating the surface of the base film by adopting a gravure roller to form a ceramic layer, and adjusting operating parameters of the gravure roller according to a viscosity and a solid content of the ceramic slurry, so as to meet the requirements of a ceramic layer coating thickness and an areal density.

Optionally, the gravure roller has a number of lines per cm of 55-74 (a number of lines per inch of 140-189) and a line depth of 30-50 µm, a coating speed is 80-140 s/m, and a speed ratio is 90%-100%. The speed ratio is a ratio of an operating speed of the gravure roller and an operating speed of a coating machine.

Step 3, drying the ceramic layer to obtain the low-internal-resistance ceramic-coated separator.

Optionally, in step 2, before coating the base film, the ceramic slurry is continuously stirred at a low rotating speed of 10-30 r/min to prevent the low viscosity ceramic slurry from settling before coating.

Optionally, the environmental humidity is controlled to be 1% or below during the preparation process, so that the water content of the low-internal-resistance ceramic-coated separator is lowered.

The present invention further provides a lithium battery, including a positive electrode, a negative electrode, a non-aqueous electrolytic solution, and the above low-internal-resistance ceramic-coated separator or the low-internal-resistance ceramic-coated separator obtained according to the above preparation method.

The present invention has the following beneficial effects:
according to the low-internal-resistance ceramic-coated separator provided by the present invention, the ceramic layer coated on the one or two sides of the polymer base film adopts low sodium boehmite, and does not contain sodium carboxymethyl cellulose. The ceramic layer has a sodium content of less than 1000 ppm, so the Gurley increase value of the separator can be significantly lowered. When applied to the lithium battery, the ceramic layer can greatly reduce the internal resistance of the cell, thereby improving the power performance and discharge efficiency of the battery, and significantly reduce the internal resistance of the separator, so that the separator obtains good use performance.

### Brief Description of the Drawings

In order to more clearly illustrate the technical solution of the embodiment of the present invention, the accompanying drawings that need to be used in the embodiment will be briefly introduced below. It should be understood that the accompanying drawings below only show certain embodiments of the present invention, and therefore should not be regarded as a limitation of a scope.

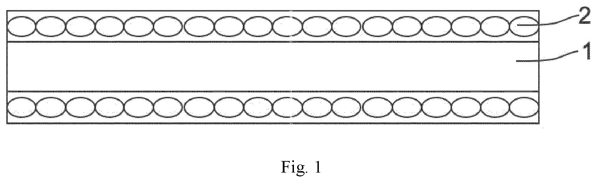

Fig. 1 is a schematic structural diagram of a low-internal-resistance ceramic-coated separator of the present invention.

### Detailed Description of the Embodiments

In order to make the purpose, technical solution and advantages of the embodiments of the present invention clearer, the technical solution in the embodiments of the present invention will be clearly and completely described below. If the conditions are not indicated in the embodiment, general conditions or the conditions recommended by a manufacturer shall be adopted. Any reagents or instruments used without indicating manufacturers are all conventional products that can be purchased commercially.

As shown in Fig. 1, a low-internal-resistance ceramic-coated separator of the present invention includes: a polymer base film 1, and a ceramic layer 2 coated on one or two sides of the polymer base film 1. The present invention starts from a formula of the ceramic layer, uses powder with a low sodium (Na) content to eliminate the influence of sodium on lithium batteries, and uses low-sodium boehmite powder with a Na content of less than 100 ppm. At the same time, the current mainstream addition of a sodium carboxymethyl cellulose (CMC) solution is removed from ceramic slurry. On the one hand, because CMC contains Na, it will also affect the lithium batteries due to the introduction of Na, so CMC needs to be removed. On the other hand, because the CMC has a large number of carboxymethyl groups and hydroxyl groups belonging to hydrophilic groups on its main chain, the CMC belongs to superabsorbent substances, and its equilibrium water increases with the increase of ambient humidity and decreases with the rise of temperature. The absence of CMC in the separator will also greatly reduce the proportion of absorbent substances, thereby reducing the water content of the separator and reducing the influence of moisture on the internal resistance of the separator.

While meeting other physical property requirements of the ceramic-coated separator, the present invention reduces the sodium content in the slurry as much as possible to achieve the effect of reducing the internal resistance of the separator, so that the separator obtains good use performance. The reason is that sodium and lithium are unified main group elements and the high sodium content in the slurry will affect the diffusion of lithium ions in the battery, so the present invention inhibits the influence of sodium ions on the diffusion of the lithium ions by controlling the content of sodium in the separator to be below 1000 ppm. In the application of lithium batteries, the ion conductivity of the ceramic-coated separator of the present invention can be more than 1.4 mS/cm, or can be more than 1.5 mS/cm.

Optionally, through adjustment to the formula of the ceramic slurry and a process, other physical properties of the ceramic-coated separator of the present invention also meet the use requirements while the internal resistance of the ceramic-coated separator is reduced. Mainly, first, under the premise of removing the CMC, the requirements for a thickness of the ceramic layer coating are met by setting a ceramic slurry solid content gradient; second, the present invention reduces the air permeability increase value and increases the Gurley value to a suitable range by adjusting the content of adhesives and additives; third, in the process of making the ceramic layer, the present invention adjusts the process parameters of coating, increases the continuous stirring process of the slurry, and prevents the precipitation of the slurry; and four, the present invention solves the problem of reducing the peel strength caused by absence of CMC through additive adjustment, so that the peel strength meets the needs of use.

The following is a further detailed description of the features and performance of the present invention in conjunction with embodiments and reference embodiments.

### Embodiment 1

(1) Preparing ceramic slurry: Low-sodium boehmite powder (BG-611D), pure water and a dispersant (D-3019) are added into a double-planet stirring tank for stirring and dispersion, and then a binder (BM-900B), a leveling agent (UNISAFE WHS-10) and a wetting agent (202E) are added in sequence.
(2) Preparing a low-internal-resistance ceramic-coated separator: The ceramic slurry is coated on two surfaces of a PE microporous base film with a thickness of 12 µm to form ceramic layers. The coating thickness on each surface is 1.5 µm. A gravure roller has a number of lines per cm of 59 (a number of lines per inch of 150) and a line depth of 40 µm, a speed ratio is 90%, and the ultra-low-internal-resistance ceramic-coated separator is obtained after drying.

### Embodiment 2

(1) Preparing ceramic slurry: Low-sodium boehmite powder (BG-611D), pure water and a dispersant (D-3019) are added into a double-planet stirring tank for stirring and dispersion, and then a binder (BM-900B), a leveling agent (UNISAFE WHS-10) and a wetting agent (202E) are added in sequence.
(2) Preparing a low-internal-resistance ceramic-coated separator: The ceramic slurry is coated by a gravure roller on two surfaces of a PE porous separation film with a thickness of 12 µm to form ceramic layers. The coating thickness on each surface is 1.5 µm. The gravure roller has a number of lines per cm of 59 (a number of lines per inch of 150) and a line depth of 40 µm, a speed ratio is 90%, and the ultra-low-internal-resistance ceramic-coated separator is obtained after drying.

### Embodiment 3

(1) Preparing ceramic slurry: Low-sodium boehmite powder (BG-611D), pure water and a dispersant (D-3019) are added into a double-planet stirring tank for stirring and dispersion, and then a binder (BM-900B), a leveling agent (UNISAFE WHS-10) and a wetting agent (202E) are added in sequence.
(2) Preparing a low-internal-resistance ceramic-coated separator: The ceramic slurry is coated by a gravure roller on two surfaces of a PE porous separation film with a thickness of 12 µm to form ceramic layers. The coating thickness on each surface is 1.5 µm. The gravure roller has a number of lines per cm of 59 (a number of lines per inch of 150) and a line depth of 40 µm, a speed ratio is 90%, and the ultra-low-internal-resistance ceramic-coated separator is obtained after drying.

### Embodiment 4

(1) Preparing ceramic slurry: Low-sodium boehmite powder (BG-611D), pure water and a dispersant (D-3019) are added into a double-planet stirring tank for stirring and dispersion, and then a binder (BM-900B), a leveling agent (UNISAFE WHS-10) and a wetting agent (202E) are added in sequence.
(2) Preparing a low-internal-resistance ceramic-coated separator: The ceramic slurry is coated by a gravure roller on two surfaces of a PE porous separation film with a thickness of 12 µm to form ceramic layers. The coating thickness on each surface is 1.5 µm. The gravure roller has a number of lines per cm of 59 (a number of lines per inch of 150) and a line depth of 40 µm, a speed ratio is 90%, and the ultra-low-internal-resistance ceramic-coated separator is obtained after drying.

### Reference embodiment 1

(1) Preparing ceramic slurry: Low-sodium boehmite powder (BG-611D), pure water and a dispersant (D-3019) are added into a double-planet stirring tank for stirring and dispersion, and then a binder (BM-900B), a B1-CMC1220 solution and a wetting agent (202E) are added in sequence.
(2) Preparing a low-internal-resistance ceramic-coated separator: The ceramic slurry is coated on two surfaces of a PE porous separation film with a thickness of 12 µm to form ceramic layers. The coating thickness on each surface is 1.5 µm. A gravure roller has a number of lines per cm of 71 (a number of lines per inch of 180) and a line depth of 30 µm, a speed ratio is 90%, and the ceramic-coated separator is obtained after drying.

### Reference embodiment 2

(1) Preparing ceramic slurry: Low-sodium boehmite powder (BG-611), pure water and a dispersant (D-3019) are added into a double-planet stirring tank for stirring and dispersion, and then a binder (BM-900B) and a wetting agent (202E) are added in sequence.
(2) Preparing a low-internal-resistance ceramic-coated separator: The ceramic slurry is coated on two surfaces of a PE porous separation film with a thickness of 12 µm to form ceramic layers. The coating thickness on each surface is 1.5 µm. A gravure roller has a number of lines per cm of 71 (a number of lines per inch of 180) and a line depth of 30 µm, a speed ratio is 90%, and the ceramic-coated separator is obtained after drying.

### Reference embodiment 3

(1) Preparing ceramic slurry: Low-sodium boehmite powder (BG-611), pure water and a dispersant (D-3019) are added into a double-planet stirring tank for stirring and dispersion, and then a binder (BM-900B), a B1-CMC1220 solution and a wetting agent (202E) are added in sequence.
(2) Preparing a low-internal-resistance ceramic-coated separator: The ceramic slurry is coated on two surfaces of a PE porous separation film with a thickness of 12 µm to form ceramic layers. The coating thickness on each surface is 1.5 µm. A gravure roller has a number of lines per cm of 71 (a number of lines per inch of 180) and a line depth of 30 µm, a speed ratio is 90%, and the ceramic-coated separator is obtained after drying.

The formulas and process parameters of the ceramic slurry in the above embodiments and reference embodiments are shown in Table 1 below:

**Table 1 Summary Table of Formulas and Process Parameters of Ceramic Slurry in Embodiments and Reference Embodiments**

| | Embodiment 1 | Embodiment 2 | Embodiment 3 | Embodiment 4 | Reference Embodiment 1 | Reference Embodiment 2 | Reference Embodiment 3 |
|---|---|---|---|---|---|---|---|
| Dispersant (kg) | 0.523 | 0.523 | 0.723 | 0.523 | 0.523 | 0.523 | 0.523 |
| Binder (kg) | 13.197 | 10.197 | 10.197 | 7.197 | 10.197 | 10.197 | 10.197 |
| Wetting agent (kg) | 0.222 | 0.222 | 0.422 | 0.19 | 0.222 | 0.222 | 0.222 |
| Leveling agent (kg) | 4.815 | 7.815 | 7.415 | 10.825 | - | - | - |
| Low-sodium boehmite (kg) | 60 | 60 | 60 | 60 | 60 | - | - |
| Boehmite (kg) | - | - | - | - | - | 60 | 60 |
| B1-CMC1220(k g) | - | - | - | - | 25.35 | - | 25.35 |
| Solid content of slurry (%) | 30.57 | 30.45 | 30.63 | 30.41 | 38.14 | 30.21 | 38.65 |
| Viscosity (mPa·S⁻¹) | 32 | 22 | 25 | 19 | 45 | 24 | 49 |

### <Evaluation method>

### (1) A peel strength between the ceramic layer and the base film

12-mm-wide and 15-cm-long adhesive tape (made by Scotch, model 550R-12) is attached to a surface of the ceramic layer on one side of the separator, and the separator is cut so that its width and length are consistent with the width and length of the adhesive tape to make a test sample. When attaching the adhesive tape to the separator, the length direction is consistent with an MD direction of the separator. It should be noted that the adhesive tape is used as a support for peeling off the ceramic layer of one side.

The test sample is placed in an atmosphere with a temperature of 23±1°C and a relative humidity of 50±5% for more than 24 hours, and the following tests are performed in the same atmosphere.

The adhesive tape and the ceramic layer immediately below it are peeled off together by about 10 cm, so that a laminator (1) of the adhesive tape and the ceramic layer and a laminator (2) of a porous substrate and the ceramic layer of the other side are separated by about 10 cm. An end of the laminator (1) is fixed to an upper chuck of TENSILON (RTC-1210A made by Orientec), and an end of the laminator (2) is fixed to a lower chuck of the TENSILON. The test sample is suspended in a gravitational direction so that a tensile angle (an angle of the laminator (1) relative to the test sample) becomes 180°. The laminator (1) is stretched at a tensile speed of 20 mm/min to test a load of peeling the laminator (1) off the porous substrate. Loads from 10 mm to 40 mm after the start of the test are acquired at 0.4 mm intervals, and an average value of these loads is used as the peel strength.

### (2) Internal resistance and ion conductivity of the separator

The internal resistance and ion conductivity are tested through electrochemical impedance spectroscopy (EIS). The separator sample is assembled into a button battery in the order of positive electrode shell-separator-stainless steel sheet gasket-spring gasket-negative electrode shell. Alternating current impedance scanning is performed by using an electrochemical workstation at a frequency of 0.01 HZ-10⁶ HZ, and a voltage amplitude of 5 mV, so as to obtain the internal resistance Rb of the separator. A calculation formula for calculating the ion conductivity of the separator is: K=d/(S*Rb), where K is the ionic conductivity (mS/cm) of the separator, d is the thickness (cm) of the separator, S is the effective working area (cm²) of the separator.

### (3) Gurley value

A composite separator sample of 100 mm×100 mm is cut, an American Gurley4110N air permeability tester is used to perform a test in a 100 cc test gas mode. The time when all the test gas passes through the composite separator sample is recorded as the Gurley value.

Referring to Table 2, the performance test results of separators prepared in the above embodiments and reference embodiments are compared as follows:

**Table 2 Relevant Performance Parameter Table of Ceramic-Coated Separators Prepared in Embodiments and Reference Embodiments**

| | Gurley increase value (s/100cc) | Internal resistance of separator (Ω) | Ion conductivity (mS/cm) | Peel strength (N/m) |
|---|---|---|---|---|
| Embodiment 1 | 33 | 0.158 | 1.54 | 27 |
| Embodiment 2 | 31 | 0.144 | 1.63 | 45 |
| Embodiment 3 | 42 | 0.153 | 1.49 | 39 |
| Embodiment 4 | 29 | 0.147 | 1.60 | 25 |
| Reference Embodiment 1 | 36 | 0.173 | 1.38 | 110 |
| Reference Embodiment 2 | 42 | 0.179 | 1.34 | 19 |
| Reference Embodiment 3 | 45 | 0.184 | 1.3 | 125 |

It can be seen from the results of Tables 1-2 above that the present invention uses the low-sodium boehmite and cancels the addition of the CMC solution, so that the Gurley increase value and the sodium content of the separator are reduced, which can significantly reduce the internal resistance of the separator and make the separator obtain good use performance. At the same time, the slurry settlement problem caused by the cancellation of the addition of the CMC solution can be solved by adjusting the preparation process parameters of the ceramic layer, and stirring can be performed at a low speed after the preparation is completed, so as to prevent settling. The operating parameters of the gravure roller are adjusted to obtain the ideal thickness and areal density of the ceramic layer. In addition, due to the cancellation of the addition of the CMC solution, the bonding performance of the ceramic slurry has decreased, and the peel strength of the ceramic coating layer has also been reduced, but through adjustment to the formula of the ceramic layer slurry, the present invention can make the peel strength of the ceramic layer still meet the use requirements of greater than 20 N/m. By comparing Embodiment 2 with Embodiment 1, it can be seen that the ceramic peel strength can be further improved by adding a leveling agent solution, so that the peel strength of the ceramic layer is increased to 40 N/m or above.

## Claims

1. A low-internal-resistance ceramic-coated separator, comprising: a polymer base film, and a ceramic layer coated on one or two sides of the polymer base film; wherein
the ceramic layer has a sodium content of less than 1000 ppm, and does not contain sodium carboxymethyl cellulose;
a peel strength between the ceramic layer and the polymer base film is 20 N/m or above, determined as described in the description;
the low-internal-resistance ceramic-coated separator has an ionic conductivity of 1.4 mS/cm or above, determined as described in the description;
wherein the ceramic layer is formed by coating of ceramic slurry, wherein the ceramic slurry has a viscosity of 10-40 mPa·S⁻¹, and a solid content of 25%-35%;
wherein the ceramic slurry comprises the following components:
dispersant: 2-6 parts by weight;
low-sodium boehmite powder with a sodium content of less than or equal to 100 ppm: 292 parts by weight;
binder: 20-60 parts by weight; and
wetting agent: 1-4 parts by weight;
wherein the ceramic slurry further comprises a leveling agent: 30-50 parts by weight.

2. The low-internal-resistance ceramic-coated separator according to claim 1, wherein the peel strength between the ceramic layer and the polymer base film is 20-70 N/m.

3. The low-internal-resistance ceramic-coated separator according to claim 1, wherein the ceramic layer has a thickness of 1-5 µm, and an areal density of 8-10 g/m².

4. The low-internal-resistance ceramic-coated separator according to claim 1, wherein the low-internal-resistance ceramic-coated separator has a Gurley value of 75-175 sec/mL, determined as described in the description.

5. The low-internal-resistance ceramic-coated separator according to claim 1, wherein the low-internal-resistance ceramic-coated separator has a water content of less than 1000 ppm.

6. A preparation method of the low-internal-resistance ceramic-coated separator according to claim 1, comprising the following steps:
Step 1, preparing ceramic slurry, including stirring and dispersing all components in water uniformly to obtain stable ceramic slurry;
Step 2, coating the slurry: providing a polymer base film, and coating the surface of the base film by adopting a gravure roller to form a ceramic layer; and
Step 3, drying the ceramic layer to obtain the low-internal-resistance ceramic-coated separator.

7. The preparation method of the low-internal-resistance ceramic-coated separator according to claim 6, wherein in the step 2, before coating the base film, the ceramic slurry is continuously stirred at a rotating speed of 10-30 r/min; the gravure roller has a number of lines per inch of 140-189, and a line depth of 30-50 µm, a coating speed is 80-140 s/m, and a speed ratio is 90%-100%, wherein the speed ratio is a ratio of an operating speed of the gravure roller to an operating speed of a coating machine.

8. The preparation method of the low-internal-resistance ceramic-coated separator according to claim 6, wherein the environmental humidity is controlled to be 1% or below during the preparation process.

9. A lithium battery, comprising a positive electrode, a negative electrode, a non-aqueous electrolytic solution, and the low-internal-resistance ceramic-coated separator according to any one of claims 1-5.

## Patentansprüche

1. Keramikbeschichteter Separator mit geringem inneren Widerstand, umfassend: einen Polymerbasisfilm und eine Keramikschicht, die auf einer oder zwei Seiten des Polymerbasisfilms beschichtet ist; wobei
die Keramikschicht einen Natriumgehalt von weniger als 1000 ppm aufweist und keine Natriumcarboxymethylcellulose enthält;
eine Schälfestigkeit zwischen der Keramikschicht und dem Polymerbasisfilm 20 N/m oder darüber ist, bestimmt wie in der Beschreibung beschrieben;
der keramikbeschichtete Separator mit geringem inneren Widerstand eine Ionenleitfähigkeit von 1,4 mS/cm oder darüber aufweist, bestimmt wie in der Beschreibung beschrieben;
wobei die Keramikschicht durch Beschichtung aus Keramikschlamm gebildet ist, wobei der Keramikschlamm eine Viskosität von 10-40 mPa·S-1 und einen Feststoffgehalt von 25 %-35 % aufweist;
wobei der Keramikschlamm die folgenden Komponenten umfasst:
Dispergiermittel: 2-6 Gewichtsteile;
Böhmitpulver mit geringem Natrium mit einem Natriumgehalt von weniger als oder gleich 100 ppm: 292 Gewichtsteile;
Bindemittel: 20-60 Gewichtsteile; und
Benetzungsmittel: 1-4 Gewichtsteile;
wobei der Keramikschlamm ferner ein Verlaufmittel umfasst: 30-50 Gewichtsteile.

2. Keramikbeschichteter Separator mit geringem inneren Widerstand nach Anspruch 1, wobei die Schälfestigkeit zwischen der Keramikschicht und dem Polymerbasisfilm 20-70 N/m ist.

3. Keramikbeschichteter Separator mit geringem inneren Widerstand nach Anspruch 1, wobei die Keramikschicht eine Dicke von 1-5 µm und eine Flächendichte von 8-10 g/m² aufweist.

4. Keramikbeschichteter Separator mit geringem inneren Widerstand nach Anspruch 1, wobei der keramikbeschichtete Separator mit geringem inneren Widerstand einen Gurley-Wert von 75-175 s/ml aufweist, bestimmt wie in der Beschreibung beschrieben.

5. Keramikbeschichteter Separator mit geringem inneren Widerstand nach Anspruch 1, wobei der keramikbeschichtete Separator mit geringem inneren Widerstand einen Wassergehalt von weniger als 1000 ppm aufweist.

6. Herstellungsverfahren des keramikbeschichteten Separators mit geringem inneren Widerstand nach Anspruch 1, umfassend die folgenden Schritte:
Schritt 1, Herstellen von Keramikschlamm, beinhaltend Rühren und Dispergieren aller Komponenten in Wasser gleichmäßig, um stabilen Keramikschlamm zu erhalten;
Schritt 2, Beschichten des Schlamms: Bereitstellen eines Polymerbasisfilms und Beschichten der Oberfläche des Basisfilms durch Annehmen einer Gravurwalze, um eine Keramikschicht zu bilden; und
Schritt 3, Trocknen der Keramikschicht, um den keramikbeschichteten Separator mit geringem inneren Widerstand zu erhalten.

7. Herstellungsverfahren des keramikbeschichteten Separators mit geringem inneren Widerstand nach Anspruch 6, wobei in Schritt 2 vor dem Beschichten des Basisfilms der Keramikschlamm kontinuierlich mit einer Rotationsgeschwindigkeit von 10-30 U/min gerührt wird; die Gravurwalze eine Anzahl an Linien pro Zoll von 140-189 und eine Linientiefe von 30-50 µm aufweist, eine Beschichtungsgeschwindigkeit 80-140 s/m ist und ein Geschwindigkeitsverhältnis 90 %-100 % ist, wobei das Geschwindigkeitsverhältnis ein Verhältnis einer Betriebsgeschwindigkeit der Gravurwalze zu einer Betriebsgeschwindigkeit einer Beschichtungsmaschine ist.

8. Herstellungsverfahren des keramikbeschichteten Separators mit geringem inneren Widerstand nach Anspruch 6, wobei die Umgebungsfeuchtigkeit gesteuert wird, um 1 % oder darunter während des Herstellungsprozesses zu sein.

9. Lithiumbatterie, umfassend eine positive Elektrode, eine negative Elektrode, eine nichtwässrige Elektrolytlösung und den keramikbeschichteten Separator mit geringem inneren Widerstand nach einem der Ansprüche 1-5.

## Revendications

1. Séparateur revêtu de céramique à faible résistance interne, comprenant : un film de base polymère, et une couche céramique revêtue sur une ou deux faces du film de base polymère ; dans lequel
la couche de céramique a une teneur en sodium inférieure à 1000 ppm et ne contient pas de carboxyméthylcellulose de sodium ;
une résistance au pelage entre la couche céramique et le film de base polymère est de 20 N/m ou plus, déterminée comme décrit dans la description ;
le séparateur revêtu de céramique à faible résistance interne présente une conductivité ionique de 1,4 mS/cm ou plus, déterminée comme décrit dans la description ;
dans lequel la couche de céramique est formée par revêtement d'une suspension de céramique, dans lequel la suspension de céramique a une viscosité de 10 à 40 mPa·^{•}S⁻¹, et une teneur en solides de 25 % à 35 % ;
dans lequel la suspension de céramique comprend les composants suivants :
dispersant : 2 à 6 parties en poids ;
poudre de boehmite à faible teneur en sodium avec une teneur en sodium inférieure ou égale à 100 ppm : 292 parties en poids ;
liant : 20 à 60 parties en poids ; et
agent mouillant : 1 à 4 parties en poids ;
dans lequel la suspension de céramique comprend en outre un agent de nivellement : 30 à 50 parties en poids.

2. Séparateur revêtu de céramique à faible résistance interne selon la revendication 1, dans lequel la résistance au pelage entre la couche céramique et le film de base polymère est de 20 à 70 N/m.

3. Séparateur revêtu de céramique à faible résistance interne selon la revendication 1, dans lequel la couche céramique présentant une épaisseur de 1 à 5 µm et une densité surfacique de 8 à 10 g/m².

4. Séparateur revêtu de céramique à faible résistance interne selon la revendication 1, dans lequel le séparateur revêtu de céramique à faible résistance interne présente une valeur Gurley de 75 à 175 sec/mL, déterminée comme décrit dans la description.

5. Séparateur revêtu de céramique à faible résistance interne selon la revendication 1, dans lequel le séparateur revêtu de céramique à faible résistance interne présente une teneur en eau inférieure à 1000 ppm.

6. Procédé de préparation du séparateur revêtu de céramique à faible résistance interne selon la revendication 1, comprenant les étapes suivantes :
Étape 1, préparation de la suspension de céramique, comprenant l'agitation et la dispersion de tous les composants dans de l'eau uniformément pour obtenir une suspension de céramique stable ;
Étape 2, revêtement de la suspension : fourniture d'un film de base polymère, et revêtement de la surface du film de base en adoptant un rouleau de gravure pour former une couche de céramique ; et
Étape 3, séchage de la couche de céramique pour obtenir le séparateur revêtu de céramique à faible résistance interne.

7. Procédé de préparation du séparateur revêtu de céramique à faible résistance interne selon la revendication 6, dans lequel à l'étape 2, avant le revêtement du film de base, la suspension de céramique est agitée en continu à une vitesse de rotation de 10 à 30 tr/min ; le rouleau de gravure a un nombre de lignes par pouce de 140 à 189, et une profondeur de ligne de 30 à 50 µm, une vitesse de revêtement est de 80 à 140 s/m et un rapport de vitesse est de 90 à 100 %, dans lequel le rapport de vitesse est un rapport d'une vitesse de fonctionnement du rouleau de gravure à une vitesse de fonctionnement d'une machine de revêtement.

8. Procédé de préparation du séparateur revêtu de céramique à faible résistance interne selon la revendication 6, dans lequel l'humidité ambiante est contrôlée pour être inférieure ou égale à 1% pendant le processus de préparation.

9. Batterie au lithium, comprenant une électrode positive, une électrode négative, une solution électrolytique non aqueuse, et le séparateur revêtu de céramique à faible résistance interne selon l'une quelconque des revendications 1 à 5.
